# EUROPÄISCHE PATENTSCHRIFT

(11) **EP 2 439 034 B1**
(45) Veröffentlichungstag und Bekanntmachung des Hinweises auf die Patenterteilung: **16.07.2014**
(21) Anmeldenummer: 11183021.2
(22) Anmeldetag: 28.09.2011
(51) Int. Cl.: B29B 11/14, B29C 49/06

(54) **Kunststoffvorformling mit Markierung zur Lageerkennung**
Plastic preform with marking for positioning
Préforme en plastique dotée d'un marquage pour la reconnaissance de position

(30) Priorität: 07.10.2010 DE 102010047619
(43) Veröffentlichungstag der Anmeldung: 11.04.2012
(73) Patentinhaber: Krones AG, 93073 Neutraubling (DE)
(72) Erfinder: Kwirandt, Dr. Rainer, 93092 Barbing (DE); Hüttner, Gerald, 92249 Vilseck (DE)
(74) Vertreter: Bittner, Bernhard

(56) Entgegenhaltungen:
- US-A1- 2008 265 461
- US-B1- 6 228 317

## Beschreibung

Die vorliegende Erfindung bezieht sich auf einen Kunststoffvorformling. Derartige Kunststoffvorformlinge sind aus dem Stand der Technik seit langem bekannt und dienen beispielsweise dazu, um im Rahmen von Blasvorgängen, insbesondere Streckblasvorgängen, zu Kunststoffbehältnissen (beispielsweise zu Getränkeflaschen) umgeformt zu werden. Dabei wird üblicherweise der erwärmte Kunststoffvorformling mit einer Streckblasmaschine zu einem Behältnis umgeformt. Hierbei sind aus dem Stand der Technik auch solche Behälter bekannt, welche nicht rotationssymmetrisch ausgebildet sind, sondern beispielsweise einen ovalen Querschnitt aufweisen. Daneben gibt es auch Behältnisse, bei denen der Verschluss stellungsgerecht zum Flaschenkörper orientiert sein muss, wobei dies auf Grund des Designs des Behältnisses oder auch technisch bedingt sein kann.

Diese Orientierung wird üblicherweise mit Nocken oder Kerben im Bereich des Mundstücks des Kunststoffvorformlings vorgenommen, die mit einem mechanischen Hilfsmittel ausgerichtet werden. Dies wiederum hat Leistungseinbußen zur Folge.

Aus der EP 1 279 477 A1, US 6 228 317 B1, US 2008/0265461 A1, JP 2007 175 994 und JP 2007 283 529 sind Vorrichtungen und Verfahren zum Blasformen eines Behältnisses bekannt. Weiterhin beschreibt die EP 0 835 736 B1 eine Vorrichtung zum Blasformen und eine Vorrichtung zum Spritzstreckblasformen von Behältnissen. Dabei sind Rotationseinrichtungen zum Rotieren des Kunststoffvorformlings um seine Längsachse beim Transport des Vorformlings vorgesehen sowie Ausrichteinrichtungen zum Ausrichten des von dem Vorformling abstehenden Griffes in eine vorgegebene Richtung.

Der vorliegenden Erfindung liegt die Aufgabe zu Grunde, ein Kunststoffbehältnis und insbesondere einen Kunststoffvorformling zur Verfügung zu stellen, der im Vergleich zu aus dem Stand der Technik bekannten Vorformlingen leichter ausgerichtet werden bzw. abgedichtet kann. Dies wird erfindungsgemäß durch einen Kunststoffvorformling nach Anspruch 1 erreicht. Vorteilhafte Ausführungsformen und Weiterbildungen sind Gegenstand der Unteransprüche.

Ein erfindungsgemäßes Kunststoffbehältnis und insbesondere ein Kunststoffvorformling weist einen Grundkörper auf, sowie einen an dem Grundkörper angeordneten Gewindebereich, wobei der Gewindebereich einteilig mit dem Grundkörper ausgebildet ist. Weiterhin weist das Kunststoffbehältnis bevorzugt einen wenigstens abschnittsweise ringförmigen Abschnitt (bzw. ringförmigen Körper) auf, der unterhalb des Gewindebereichs angeordnet ist und sich in einer radialen Richtung des Kunststoffbehältnisses nach außen erstreckt und der einteilig mit dem Grundkörper ausgebildet ist. Dabei weist der ringförmige Abschnitt eine erste dem Grundkörper zugewandte Oberfläche und eine zweite dem Gewindebereich zugewandte (bzw. dem Grundkörper abgewandte) Oberfläche auf. Erfindungsgemäß ist an der dem Grundkörper zugewandten ersten Oberfläche des ringförmigen Abschnitts wenigstens eine optisch wahrnehmbare Markierung angeordnet.

Erheblichen Einfluss auf die Gestaltung des Kunststoffbehältnisses hat die Tatsache, dass das Material oft transparent oder teiltransparent ist. So tritt das meiste eingestrahlte Licht durch das Kunststoffbehältnis hindurch und es kann durch das Kunststoffbehältnis hindurchgesehen werden. Bevorzugt ist es, das Kunststoffbehältnis so zu gestalten, dass die Störungen durch das hindurchgehende Licht minimiert und die Wirkung des an der Oberfläche reflektierten Lichts optimiert wird.

Unter einem ringförmigen Abschnitt wird ein Bereich verstanden, der hier beispielsweise eine geometrische Längsache vollständig umgibt. Dabei kann dieser ringförmige Abschnitt kreisrund ausgebildet sein, es wäre jedoch auch möglich, dass der Abschnitt beispielsweise oval und/oder polygonal ausgebildet ist. Vorzugsweise weist der ringförmige Abschnitt in der radialen Richtung eine konstante Breite auf, es wäre jedoch auch möglich, dass die radiale Breite dieses ringförmigen Abschnitts in der Umfangsrichtung des Kunststoffvorformlings variiert.

Vorteilhaft handelt es sich bei dem ringförmigen Abschnitt um einen vollständig ausgebildeten ringförmigen Körper, der vorteilhaft umlaufend einheitlich ausgebildet ist. Daneben wäre es jedoch auch möglich, dass sich der ringförmige Körper leicht schräg bezüglich der radialen Richtung erstreckt. Vorteilhaft erstreckt sich jedoch der ringförmige Körper im Wesentlichen genau in der besagten radialen Richtung.

Unter einer Markierung im Sinne der vorliegenden Erfindung werden insbesondere Codierungen und/oder Ausnehmungen jeglicher geometrischer Formen verstanden. Bevorzugt weisen die Markierungen u-Form, v-Form, Pyramidenform oder Kegelform auf.

Bei einer weiteren vorteilhaften Ausführungsform erstreckt sich auch die besagte Markierung in der radialen Richtung, was die Herstellung des besagten Kunststoffvorformlings erleichtert.

Im Gegensatz zum Stand der Technik wird daher vorgeschlagen, anstelle von Ausrichtnocken und -kerben eine Markierung an der Unterseite des ringförmigen Körpers, bei dem es sich insbesondere um einen Tragring handelt, anzubringen. Die Ausrichtnocken und - kerben, die an die Maschinen einiger Hersteller angepasst sind, haben bestimmte Nachteile. Einerseits sind sie teilweise an optisch schlecht zugänglichen Stellen zwischen dem Tragring und den Gewindegängen. Daneben sind auch Beispiele bekannt, bei denen die Markierung an der Oberseite des Tragrings angebracht wurde, wobei sie in diesem Fall zum Teil von Greifeinrichtungen wie Haltezangen verdeckt wird. Kerben im Tragring sind in der Regel sehr groß ausgeführt und reichen oft bis an den Grundkörper des Kunststoffvorformlings heran oder sind als Durchgangsöffnung von erster Oberfläche zu zweiter Oberfläche des Tragrings ausgebildet. Dies führt dazu, dass bedingt durch diese Kerben die Behältnisse während des Blasvorgangs nur aufwendig an der Mündung abgedichtet werden können.

Bei anderen Streckblasmaschinen wird jedoch über den Tragring abgedichtet, sodass derartige Kerben den Blasvorgang zumindest stören und sogar ganz verhindern können.

Bei einer vorteilhaften Ausführungsform ist der Grundkörper des Kunststoffvorformlings expandierbar. Vorteilhaft dient die Markierung zur Erfassung einer Drehstellung des Kunststoffvorformlings bezüglich seiner Längsrichtung. Es wäre jedoch auch möglich, über die Markierung Informationen auszugeben. So wäre es beispielsweise denkbar, dass über die Markierung Informationen betreffend den Kunststoffvorformling ausgegeben werden können und entsprechende Maschinen der Anlage entsprechend auf diese Informationen reagieren können.

Viele Getränkeabfüller und Konverter benutzen verschiedene Kunststoffvorformlinge zur Herstellung von ein und demselben Behälter. Dies ist jedoch mit Parameteranpassungen im Blas- und Heizprozess verbunden. Unter Umständen können sich in der Anlage noch Kunststoffvorformlinge befinden, die nicht zu dem speziellen Prozess gehören. Dies kann wiederum zu Störungen in der Linie kommen, insbesondere dann, wenn ein falscher Kunststoffvorformling nicht erkannt und nicht entsprechend von einer Blasmaschine ausgeschleust wird. In diesem Falle kann die Markierung dazu dienen, entsprechende falsche Kunststoffvorformlinge auszuschleusen.

Bei einer vorteilhaften Ausführungsform ist die Markierung eine in der ersten Oberfläche ausgebildete Ausnehmung. Hierunter ist zu verstehen, dass es sich bei der Markierung beispielsweise um eine Kerbe oder dergleichen handeln kann, welche damit mechanisch in der besagten ersten Oberfläche ausgebildet ist. Bevorzugt ist das Kunststoffbehältnis aus PET hergestellt.

Vorteilhaft erstreckt sich diese besagte Ausnehmung nicht bis zu der zweiten Oberfläche. Damit ist die Markierung hier nur an der Unterseite des ringförmigen Abschnittes bzw. Tragrings angeordnet. Gleichwohl ist auf diese Weise die Markierung optisch gut zugänglich, wobei eine Erfassung der Markierung insbesondere nicht durch Greifelemente und auch nicht durch das Gewinde des Kunststoffvorformlings gestört wird. Dadurch, dass die Markierung vorteilhaft nicht durch den ringförmigen Körper bzw. Tragring durchgeht, weist der Tragring an seiner zweiten Oberfläche eine ungestörte Dichtfläche auf, was insbesondere für den nachfolgenden Blasvorgang vorteilhaft ist.

Vorteilhaft ist der ringförmige Abschnitt wenigstens abschnittsweise unpoliert und ist vorteilhaft vollständig unpoliert. Üblicherweise werden die Kunststoffvorformlinge an ihrer Oberfläche und auch an der Oberfläche des besagten Tragrings poliert. Bei der vorliegenden Ausführungsform ist es jedoch vorteilhaft, bewusst die besagte Oberfläche unpoliert zu lassen. Auf diese Weise ist es möglich, dass die Durchsicht auf einen Hintergrund von dem Grundkörper des Kunststoffvorformlings her eingeschränkt ist und auf diese Weise eine verbesserte Sichtbarkeit an kritischen Stellen der Anlage, wie beispielsweise Kanten einer Greifklammer gewährleistet ist. Es wäre jedoch umgekehrt auch möglich, dass der Tragering poliert und die Kerbe bzw. Markierung matt ist.

Vorteilhaft weichen die Seitenflächen der Markierung sowohl stark von der Horizontalen als auch von der Vertikalen ab. Sie sind z. B. V-förmig. Dadurch sind die Seitenflächen der Markierung bei der vorzugsweise nahezu vertikalen Beobachtungsrichtung einerseits groß im Bild zu sehen. Andererseits erfüllen sie, im Gegensatz zur horizontalen Tragringfläche, nicht mehr die Reflexionsbedingung zwischen Beleuchtungs- und Beobachtungsrichtung. Dadurch erscheinen die Markierungen dunkel auf dem reflektierenden Tragering. Vorteilhaft, zur Verstärkung des Effektes, kann die Markierung noch poliert werden. Auf diese Weise ist eine sehr gute Erfassung der Markierung mit optischen Bildaufnahmeeinrichtungen möglich.

Wie erwähnt, ist die Tragringunterseite des Kunststoffvorformlings vorteilhaft mattiert, das heißt, die Oberfläche weicht feinkörnig leicht von der Horizontalen ab. Die Vorzüge, die sich hierdurch ergeben, liegen darin, dass eine derartige Oberfläche die harten Reflexionsbedingungen zwischen einer Beleuchtungs- und einer Beobachtungsrichtung abmildern. Dadurch wird der Reflex körniger, dafür jedoch gleichmäßig hell. Die Markierung bzw. Kerbe hebt sich in diesem Fall besonders gut ab.

Weiterhin wird die Sicht durch den Tragring des Kunststoffvorformlings nebelig gestört und dadurch wird der Einfluss von Störungen hinter dem Tragring, wie sie sich durch die Haltezange und die Gewinde und die Umgebung ergeben können, reduziert. Auf diese Weise wird das Bild besser auswertbar.

Daneben spart die besagte raue Oberfläche auch Kosten bei der Herstellung. Die Spritzwerkzeuge, mit denen der Kunststoffvorformling hergestellt wird, sind üblicherweise rau, wobei die ersten Bearbeitungsschritte mit gröberen Werkzeugen vorgenommen werden. Um eine hochglänzende Oberfläche zu erzeugen sind teure zeitaufwendige Polierverfahren notwendig. Diese Verfahren können im Bereich des Tragrings des Kunststoffvorformlings eingespart werden und gerade hierdurch wird der Kunststoffvorformling besser inspizierbar.

Es wäre weiterhin auch möglich, mehrere Markierungen bzw. Kodierungen an dem Kunststoffvorformling anzubringen. Neben einer Markierung an der Unterseite des Tragrings können auch an anderen Oberflächen, wie beispielsweise unterhalb der Mündung derartige Markierungen angebracht werden. Derartige Kodierungen können beispielsweise durch eine oder mehrere Linien wie Kerben oder durch die geometrische Ausgestaltung einer derartigen Kerbe ausgebildet sein. Daneben können auch anstelle von radialen Kerben andere Strukturen, beispielsweise mit schrägen Seitenflanken vorgesehen sein, wie beispielsweise pyramiden oder kegelförmige Vertiefungen. Diese Kodierungen können ebenfalls für eine Orientierung des Kunststoffvorformlings genutzt werden.

Auf diese Weise kann ein "maschinenlesbarer" Kunststoffvorformling zur Verfügung gestellt werden. Dabei kann die Behandlungsmaschine anhand dieses (insbesondere am Tragring angebrachten) Codes den Kunststoffvorformling zuordnen und ggfs. auf den Kunststoffvorformling reagieren. So kann die Maschine geeignete Maßnahmen einleiten wie beispielsweise eine Ausschleusung des Kunststoffvorformlings, eine Anpassung von Bearbeitungsparametern, eine Orientierung des Kunststoffvorformlings und dergleichen.

Bei einer weiteren vorteilhaften Ausführungsform umgibt der ringförmige Körper den Kunststoffvorformling vollständig und ist ohne in Längsrichtung des Kunststoffvorformlings durchgehende Ausnehmungen ausgebildet. Auf diese Weise wird - wie oben erwähnt - die Blasbarkeit in einem nachfolgenden Umformungsprozess erleichtert.

Bei einer weiteren vorteilhaften Ausführungsform ist das Kunststoffbehältnis ein Spritzgießteil. Dabei ist es möglich, dass die besagte Markierung bereits während des Spritzvorgangs in den Kunststoffvorformling mit eingearbeitet wird.

Bei einer weiteren vorteilhaften Ausführungsform streckt sich der ringförmige Abschnitt in der radialen Richtung des Kunststoffbehältnisses über den Gewindebereich hinaus. Auf diese Weise wird in einem Umformungsprozess die Abdichtung mittels einer Blasdüse erleichtert. Bei einer weiteren vorteilhaften Ausführungsform ist die besagte Markierung nur an der ersten Oberfläche angeordnet, ggf. aber auch von oben wahrnehmbar.

Bei einer weiteren vorteilhaften Ausgestaltung ist das Kunststoffbehältnis wenigstens teilweise transparent. Unter wenigstens teilweise ist hierbei zu verstehen, dass einerseits einzelne geometrische Bereiche des Kunststoffvorformlings transparent ausgebildet sein können, es wäre jedoch auch möglich, dass unter teilweise transparent eine gewisse Transparenz, beispielsweise eine 60- oder 50% -ige Transparenz oder eine transparente Farbe zu verstehen ist.

Sind in dem Material des Kunststoffvorformlings stark streuende Teilchen enthalten, die den Kunststoffvorformling undurchsichtig bzw. diffus machen, dann überwiegt die diffuse Streuung. Strukturen wie nicht durchgehende Kerben, die die Reflexionseigenschaften ausnutzen, sind dann nicht mehr so gut sichtbar. Da die diffuse Streuung meist sehr hell ist, wird der Abstand zu den Störungen des Hintergrundes größer. Diese diffuse Streuung verleiht dem Kunststoffvorformling dann ein sehr gleichmäßiges Aussehen. In diesem Fall wird bevorzugt eine (durch den Tragring) durchgehende Markierung bzw. Kerbe verwendet. Bevorzugt ist jedoch eine derartige durchgehende Kerbe bzw. Ausnehmung nur an dem radial äußeren Rand des Kunststoffvorformlings vorgesehen und reicht daher insbesondere nicht bis an den Grundkörper des Kunststoffvorformlings heran. Auf diese Weise verbleibt an dem Tragring ausreichend Platz für dessen Abdichtung innerhalb der Blasmaschine bzw. während des Blasprozesses.

Weitere Vorteile und Ausführungsformen ergeben sich aus den beigefügten Zeichnungen.

Darin zeigen:
- Fig. 1: eine Seitenansicht eins erfindungsgemäßen Kunststoffvorformlings;
- Fig. 2: eine perspektivische Ansicht eines erfindungsgemäßen Kunststoffvorformlings;
- Fig. 3: eine Teildarstellung zur Veranschaulichung der Markierung des Kunststoffvorformlings;
- Fig. 4: eine weitere Darstellung zur Veranschaulichung der Markierung.

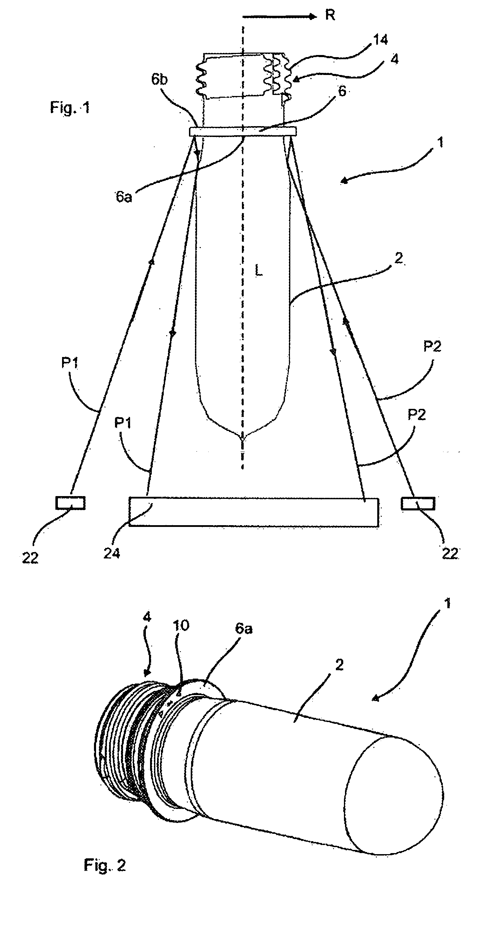

Fig. 1 zeigt eine Seitenansicht eines erfindungsgemäßen Kunststoffvorformlings 1. Dieser Kunststoffvorformling weist dabei einen Grundkörper 2 auf, wobei dieser Grundkörper im Rahmen eines Expansionsvorgangs expandierbar ist sowie einen Gewindebereich 4, der hier einteilig mit dem Grundkörper 2 ausgebildet ist. Der Gewindebereich 4 wird im Rahmen des Expansionsvorgangs nicht verstreckt. Das Bezugszeichen 14 bezieht sich auf einen Gewindegang des Gewindes des Kunststoffvorformlings. Weiterhin weist der Kunststoffvorformling einen ringförmigen Körper, das heißt einen Tragring 6 auf, der wiederum eine nach oben, das heißt dem Gewindebereich 4 zugewandte Oberfläche 6b und eine nach unten, das heißt dem Grundkörper 2 zugewandte Oberfläche 6a aufweist.

Bei Kunststoffvorformlingen aus klarem, wenigstens teildurchsichtigem Material geht bei einer Inspektion der Hauptanteil des Lichts durch den durchsichtigen Tragring 6 hindurch. Dieser Anteil verursacht im Raum, am Gewinde oder an der Haltevorrichtung Störungen, die durch einen polierten Tragering gut sichtbar sind. Um diese Störungen zu mindern, sollte der Hintergrund und die Haltevorrichtung idealerweise eine matte, stark absorbierende und abriebsfeste Oberfläche besitzen. Vollumfängliche Haltevorrichtungen sind ideal, weil sie einen gleichmäßigen Hintergrund für den Tragering bilden - leider sind sie nur eingeschränkt realisierbar.

Der bildbestimmende Lichtanteil ist bei Vorformlingen aus durchsichtigem Material das Reflexlicht. Bei der Inspektion muss deshalb für die Erfüllung der Reflexionsbedingung zwischen Beleuchtung und Beobachtungsrichtung gesorgt werden.

Falls jedoch, wie in einer Ausführungsform vorgeschlagen, der Tragring 6 nicht vollkommen transparent ausgestaltet sondern unpoliert ist, kann Licht an der Oberfläche 6a gleichmäßiger reflektiert werden. Die Pfeilketten P1 und P2 veranschaulichen mögliche Strahlengänge bei der Inspektion dieses Behältnisses bzw. der Unterseite 6a des Tragrings. Dabei wird von Beleuchtungseinrichtungen 22 , wie beispielsweise ringförmig um die Längsrichtung L des Kunststoffvorformlings angeordneten LED's Licht auf den Kunststoffvorformling gerichtet und das reflektierte Licht von einer Kameraeinrichtung 24 aufgenommen und auf diese Weise ein (ortsaufgelöstes) Bild der Unterseite des Kunststoffvorformlings 1 bzw. des Tragrings aufgenommen.

Damit wird das eigentliche Bild jeweils durch eine zweifach Reflexion am Tragring 6 und am Grundkörper 2 des Kunststoffvorformlings 1 erzeugt. Da die Oberflächen (des Grundkörpers 2) ziemlich glänzend sind, entsteht nur ein kleiner Winkelbereich, in dem die Reflexionsbedingungen erfüllt sind. Dies ist der Ansatzpunkt für die Aufnahme der Markierung. Bevorzugt ist daher der Grundkörper 2 des Kunststoffvorformlings poliert.

Bei dem Strahlengang P1 gelangt das Licht zunächst an die Unterseite des Tragrings und wird von dort über den Grundkörper 2 zu der Bildaufnahmeeinrichtung 24 (die beispielsweise als Kamera ausgeführt sein kann) geleitet. Bei dem Strahlengang P2 wird das Licht zunächst an dem Grundkörper 2 reflektiert und gelangt dann über die Unterseite 6b des Tragrings zu der Bildaufnahmeeinrichtung 24. Damit eignet sich der hier beschriebene Kunststoffvorformling insbesondere für eine perizentrische (bzw. vollumfängliche) Beobachtung entlang seiner Längsrichtung L.

Fig. 2 zeigt eine perspektivische Ansicht eines erfindungsgemäßen Kunststoffvorformlings 1. Dabei erkennt man auch hier Markierungen 10 an der Unterseite 6a des Tragrings 6. Diese Markierungen 10 können mithilfe optischer Inspektionseinrichtungen erfasst werden. Dabei wäre es - wie oben erwähnt - auch möglich, eine Vielzahl von Markierungen anzuordnen, sodass aus diesen Markierungen auf Eigenschaften des Kunststoffvorformlings geschlossen werden kann. Auch wäre es möglich, beispielsweise einen Barcode oder ähnliches an der Unterseite des 6a des Gewindes 6 anzubringen. Daneben ist es umgekehrt auch möglich, eine derartige Codierung 10 auch vorzusehen, damit die Maschine feststellen kann, welcher Kunststoffvorformling sich in der Maschine befindet, wobei hier die Markierung 10 auch für eine Feststellung der Orientierung des Kunststoffvorformlings bezüglich seiner Längsachse L genutzt werden kann.

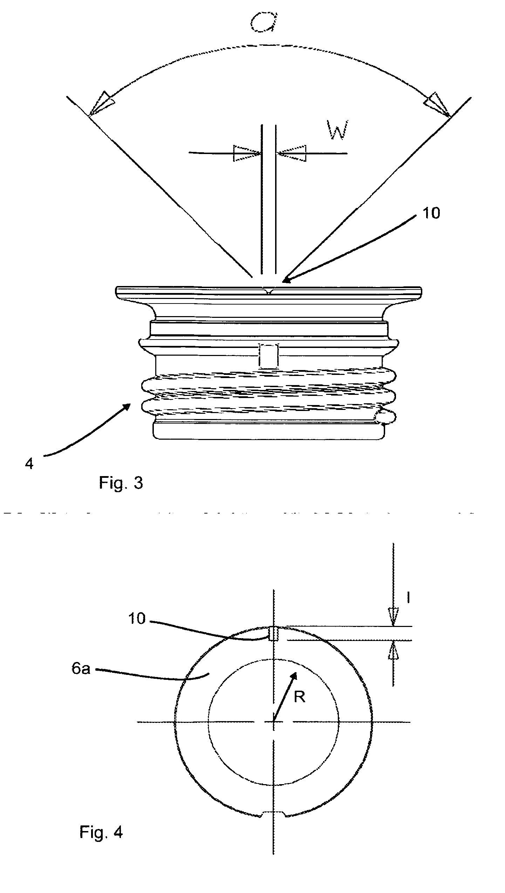

Fig. 3 zeigt eine detaillierte Darstellung eines Kunststoffvorformlings bzw. dessen Markierung. Bei dieser Ausgestaltung weist die Markierung eine Breite w auf, die zwischen 0,5 und 2 mm liegt. Die Markierung bzw. Kerbe ist hierbei V-förmig angeordnet und die beiden Seitenflächen dieses V liegen hier in einem Winkel a, der vorteilhaft zwischen 60° und 120° liegt.

Fig. 4 zeigt eine Draufsicht auf den Tragring aus Fig. 3. Man erkennt, dass die Markierung hier vom Rand des Tragrings 6 nach innen reicht und sich etwa über die Hälfte des Tragrings radial nach innen erstreckt.

Die Länge I dieser Markierung liegt dabei zwischen 2 mm und 8 mm, bevorzugt zwischen 2 mm und 5 mm.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Kunststoffvorformling
- 2: Grundkörper
- 4: Gewindebereich
- 6: Tragring
- 6a: dem Grundkörper 2 zugewandte Oberfläche des Tragrings
- 6b: dem Gewindebereich 4 zugewandte Oberfläche des Tragrings
- 10: Markierung
- 14: Gewindegang
- 22: Beleuchtungseinrichtung
- 24: Beobachtungseinrichtung

- L: Längsachse des Kunststoffvorformlings 1
- P1, P2: Pfeilketten, Strahlengänge
- a: Winkel
- w: Breite
- I: Länge
- R: radiale Richtung

## Patentansprüche

1. Kunststoffbehältnis (1), insbesondere Kunststoffvorformling (1), mit einem Grundkörper (2), einem an dem Grundkörper angeordneten Gewindebereich (4), wobei der Gewindebereich (4) einteilig mit dem Grundkörper (2) ausgebildet ist und mit einem wenigstens abschnittsweise ringförmigen Abschnitt (6), der unterhalb des Gewindebereichs (4) angeordnet ist und sich in einer radialen Richtung (R) des Kunststoffbehältnisses (1) nach aussen erstreckt und der einteilig mit dem Grundkörper ausgebildet ist, wobei der ringförmige Abschnitt eine erste dem Grundkörper (2) zugewandte Oberfläche (6a) und eine zweite dem Gewindebereich (4) zugewandte Oberfläche (6b) aufweist,
**dadurch gekennzeichnet, dass**
an der dem Grundkörper (2) zugewandten Oberfläche (6a) wenigstens eine optisch wahrnehmbare Markierung (10) angeordnet ist, der ringförmige Abschnitt (6) den Kunststoffvorformling (1) vollständig umgibt und ohne in Längsrichtung (L) des Kunststoffvorformlings (1) durchgehende Ausnehmungen ausgebildet ist.

2. Kunststoffbehältnis (1) nach Anspruch 1,
**dadurch gekennzeichnet, dass**
die Markierung (10) eine in der ersten Oberfläche (6a) ausgebildete Ausnehmung (10) ist.

3. Kunststoffbehältnis nach wenigstens einem der vorangegangenen Ansprüche,
**dadurch gekennzeichnet, dass**
der ringförmige Abschnitt (6) wenigstens abschnittsweise unpoliert ist.

4. Kunststoffbehältnis nach wenigstens einem der vorangegangenen Ansprüche,
**dadurch gekennzeichnet, dass**
die Markierung (10) poliert ist.

5. Kunststoffbehältnis nach wenigstens einem der vorangegangenen Ansprüche,
**dadurch gekennzeichnet, dass**
das Kunststoffbehältnis (1) ein Spritzgießteil (1) ist.

6. Kunststoffbehältnis nach wenigstens einem der vorangegangenen Ansprüche,
**dadurch gekennzeichnet, dass**
sich der ringförmige Abschnitt (6) in der radialen Richtung (R) über den Gewindebereich (4) hinaus erstreckt.

7. Kunststoffbehältnis nach wenigstens einem der vorangegangenen Ansprüche,
**dadurch gekennzeichnet, dass**
die Markierung (10) nur an der ersten Oberfläche (6a) angeordnet ist.

8. Kunststoffbehältnis nach wenigstens einem der vorangegangenen Ansprüche,
**dadurch gekennzeichnet, dass**
das Kunststoffbehältnis (1) wenigstens teilweise transparent ist.

## Claims

1. A plastic container (1), in particular a plastic preform (1), having a base body (2), a thread region (4) arranged on the base body, wherein the thread region (4) is formed in one piece with the base body (2) and a section (6) of which at least parts are annular, which is arranged underneath the thread region (4), extends outwards in a radial direction (R) of the plastic container (1) and is formed in one piece with the base body, wherein the annular section has a first surface (6a) facing the base body (2) and a second surface (6b) facing the thread region (4),
**characterized in that**
at least one optically perceivable marking (10) is arranged on the surface (6a) facing the base body (2), that the annular section (6) surrounds the plastic preform (1) completely and is formed without continuous recesses in the longitudinal direction (L) of the plastic preform (1).

2. The plastic container (1) according to claim 1,
**characterized in that**
the marking (10) is a recess (10) formed in the first surface (6a).

3. The plastic container according to at least one of the preceding claims,
**characterized in that**
at least parts of the annular section (6) are unpolished.

4. The plastic container according to at least one of the preceding claims,
**characterized in that**
the marking (10) is polished.

5. The plastic container according to at least one of the preceding claims,
**characterized in that**
the plastic container (1) is an injection moulded article (1).

6. The plastic container according to at least one of the preceding claims,
**characterized in that**
the annular section (6) extends beyond the thread region (4) in the radial direction (R).

7. The plastic container according to at least one of the preceding claims,
**characterized in that**
the marking (10) is only arranged on the first surface (6a).

8. The plastic container according to at least one of the preceding claims,
**characterized in that**
the plastic container (1) is at least partially transparent.

## Revendications

1. Récipient en matière plastique (1), en particulier préforme en matière plastique (1), avec un corps de base (2), une partie filetée (4) présentée sur le corps de base, ladite partie filetée (4) étant réalisée d'un seul tenant avec le corps de base (2), et avec une section (6) au moins partiellement annulaire présentée en dessous de la partie filetée (4), laquelle s'étend vers l'extérieur dans une direction radiale (R) du récipient en matière plastique (1) et est réalisée d'un seul tenant avec le corps de base, ladite section annulaire présentant une première surface (6a) opposée au corps de base (2) et une deuxième surface (6b) opposée à la partie filetée (4),
**caractérisé en ce qu'**
au moins un marquage (10) visuellement perceptible est présenté sur la surface (6a) opposée au corps de base (2), **en ce que** la section annulaire (6) entoure complètement la préforme en matière plastique (1) et est réalisée sans évidements continus dans la direction longitudinale (L) de la préforme en matière plastique (1).

2. Récipient en matière plastique (1) selon la revendication 1, **caractérisé en ce que**
le marquage (10) est un évidement (10) formé dans la première surface (6a).

3. Récipient en matière plastique selon au moins une des revendications précédentes, **caractérisé en ce que**
la section annulaire (6) est au moins partiellement non polie.

4. Récipient en matière plastique selon au moins une des revendications précédentes, **caractérisé en ce que**
le marquage (10) est poli.

5. Récipient en matière plastique selon au moins une des revendications précédentes, **caractérisé en ce que**
le récipient en matière plastique (1) est une pièce moulée par injection (1).

6. Récipient en matière plastique selon au moins une des revendications précédentes, **caractérisé en ce que**
la section annulaire (6) s'étend au-delà de la partie filetée (4) dans la direction radiale (R).

7. Récipient en matière plastique selon au moins une des revendications précédentes, **caractérisé en ce que**
le marquage (10) n'est présenté que sur la première surface (6a).

8. Récipient en matière plastique selon au moins une des revendications précédentes, **caractérisé en ce que**
ledit récipient en matière plastique (1) est au moins partiellement transparent.
